# EUROPEAN PATENT APPLICATION

(11) **EP 4 563 935 A1**
(43) Date of publication of application: **04.06.2025**
(21) Application number: 23275168.5
(22) Date of filing: 30.11.2023
(51) Int. Cl.: G01B 5/16, G01B 5/20

(54) **METHOD FOR DETERMINING INFORMATION ABOUT ONE OR MORE DEPRESSIONS IN A PART**

(71) Applicant: Renishaw PLC, Wotton-under-Edge, Gloucestershire GL12 8JR (GB)
(72) Inventor: The designation of the inventor has not yet been filed
(74) Representative: Rolfe, Edward William

(57) **Abstract**

A method of determining information about one or more depressions in a part, the method comprising: taking a first set of measurement data of the part obtained across the one or more depressions by a probe mounted on a coordinate positioning apparatus via a probe mount of the coordinate positioning apparatus; taking a second set of measurement data of the part obtained across the one or more depressions by a probe mounted on the coordinate positioning apparatus via a probe mount of the coordinate positioning apparatus, the absolute positional accuracy within the coordinate positioning machine's measurement volume of the second set of measurement data being lower than that of the first set of measurement data, but wherein the second set of measurement data extends deeper into the one or more depressions than that of the first set of measurement data; using the first and second sets of measurement data to determine information about the one or more depressions.

## Description

This invention relates to a method for determining information about one or more depressions in the surface of a part using a probe mounted on a coordinate positioning apparatus.

In particular, the invention provides an improved method for determining information about a threaded member. For instance, the invention provides an improved method for determining one or more of the following aspects of a threaded member: i) its thread centre line, ii) a pitch diameter line, iii) its pitch diameter or radius (also known as its "effective diameter" or "effective radius"), iv) its minor diameter or radius, in the case where the threaded member is an externally threaded member; and v) its major diameter or radius, in the case where the threaded member is an internally threaded member.

The use of a contact probe on a coordinate positioning apparatus such as a coordinate measurement machine "CMM" or machine tool to obtain measurement information about an artefact is well-known. Contact probes commonly have a stylus with a stylus tip for contacting an artefact to be measured. Often, the stylus tip is a spherical element, such as a ruby ball.

A typical CMM facilitates relative motion of the artefact and probe in three perpendicular linear axes (a "three-axis" machine) such that the stylus tip can be brought into contact with the artefact under the control of a computer. It is also known to provide the CMM with one or more axes of rotation so as to facilitate relative rotation between the artefact and the contact probe. A common setup is the provision of a two-axis articulated head, on which a probe can be mounted, and which facilitates rotation of the probe about two perpendicular axes of rotation. When a two-axis articulated head is provided on a three-axis CMM, it is commonplace to refer to the CMM as a "five-axis" CMM.

During a measurement operation, the probe's stylus tip is moved into the artefact.

Contact between the stylus tip and the artefact is detected and the position of the stylus tip can be used to determine the point of contact. Contact probes are typically categorised as being either a touch-trigger probe or an analogue (or "scanning") probe. Touch-trigger probes output a "trigger" signal when contact between the stylus and part is detected. The motion of the CMM is stopped on receipt of a trigger signal and the position of the machine's axes at the point the trigger signal is received are determined, so that the position of the stylus tip in three-dimensional space can be determined. Subsequent touch-trigger measurements can be obtained by repeating this process. In contrast, analogue (or "scanning") probes provide an output which varies dependent on the extent/degree of stylus deflection. The analogue probe's output can be combined with the machine axes positions so as to determine the position of the stylus tip in a three-dimensional measurement space/volume. With an analogue probe, a series of surface measurements can be obtained whilst scanning the probe in continuous contact with the surface of the artefact (hence the name "scanning" probe). In some analogue/scanning probes the probe signal may be an aggregated deflection value, and could be direction/dimension independent. In some probes, the probe signals are direction/dimension dependent. If stylus deflection in more than one dimension is possible, then separate signals could be provided for each dimension. For example, the probe signal could indicate a deflection in at least one dimension, optionally two dimensions, for example three dimensions. Those dimensions could be mutually orthogonal. As will be understood, the term "analogue" is used to refer to the fact that the probe provides signals indicative of the extent of deflection of the stylus, and is not descriptive of the type/form of signal of the probe. Accordingly, as will be understood, the signal indicating the extent of deflection could be analogue or digital in form.

With ever-increasing demands on efficiency, quality and miniaturisation in various fields of manufacture, including aerospace and automotive, the accurate formation of very small features to a particular design specification is becoming more and more critical. Therefore, there is increasing demand to be able to verify accurate information about such small features to ensure that they have been formed in a part in accordance with the design specification. However, the dimensional measurement of very small features presents many challenges.

A threaded feature (i.e. one or more helical or spiral grooves) extending around a boss (in which case the thread is an "external" thread) or a bore (in which case the thread is an "internal" thread) is a particularly common feature which manufacturers want to measure accurately but find difficult to do so, especially in a cost-efficient and time-efficient manner, and such features get harder to measure the smaller the thread is. For instance, the inventors were faced with the challenge of determining the information about a threaded feature having a pitch as small as 0.5 mm, a pitch (or "effective") diameter as small as 2.65 mm and a depth as small as 0.27 mm. Due to issues faced with accurately measuring small features, such features/threads could be measured on a dedicated profilometer such as the Mitutoyo CV-4500. However, not only is there a desire to avoid having to move parts from a coordinate positioning apparatus such as a CMM or machine tool onto a dedicated profilometer for such measurement, such profilometers also cannot adequately measure certain desired attributes of a threaded feature, such as the thread's pitch (or "effective") diameter. Indeed, measuring the pitch diameter or radius of a threaded feature is known to be particularly difficult to measure, and current techniques for measuring it include using dedicated micrometer screw gauges, the "three wire method", and optical comparators.

The present invention relates to a method of determining information about depressions in a part, and for example for determining information about a threaded feature, such as the pitch diameter or radius, using measurement data obtained on a coordinate positioning apparatus (such as a CMM or machine tool), for example via a contact probe mounted on a coordinate positioning apparatus.

According to a first aspect of the invention there is provided a method of determining information about one or more depressions in a part, the method comprising: taking a first set of measurement data of the part obtained across the one or more depressions by a probe mounted on a coordinate positioning apparatus via a probe mount of the coordinate positioning apparatus; taking a second set of measurement data of the part obtained across the one or more depressions by a probe mounted on the coordinate positioning apparatus via a probe mount of the coordinate positioning apparatus, the absolute positional accuracy within the coordinate positioning machine's measurement volume of the second set of measurement data being lower than that of the first set of measurement data, but wherein the second set of measurement data extends deeper into the one or more depressions than that of the first set of measurement data; using the first and second sets of measurement data to determine information about the one or more depressions.

Whilst the first and second sets of measurement data could be obtained by the same probe (e.g. operating in different modes or under different conditions such that their absolute positional accuracy differs), in a preferred embodiment of the invention the first set of measurement data can be obtained via a first probe and the second set of measurement data can be obtained by a second probe that is different to the first probe.

The probe, e.g. one or both of the first and second probes, can be a contact probe.

Accordingly, for example, the first set of measurement data could be obtained via a first contact probe and the second set of measurement data could be obtained by a second contact probe that is different to the first contact probe.

The first contact probe can comprise a workpiece contacting stylus tip, the absolute position of which within the coordinate positioning machine's measurement volume is known to a first level of accuracy. The stylus tip could comprise a spherical member, for example. The first contact probe could be at least bi-directional (in that it can detect/measure deflection of the stylus in at least two orthogonal directions). Whilst it is not essential to the invention that the stylus tip is spherical and/or that the contact probe is at least bi-directional, such probes are readily available. The first contact probe could be a touch-trigger probe. In preferred embodiments, the first contact probe comprises an analogue (or "scanning" probe). It can be preferred that the first contact probe is an analogue probe as opposed to a touch-trigger probe, because an analogue probe enables a series of surface measurements to be obtained whilst scanning the probe in continuous contact with the surface of the part, thereby facilitating the obtaining of lots of measurements more quickly compared to a touch-trigger probe.

The second contact probe could comprise a reference member for engaging the part, and the second contact probe can further comprise a stylus, the stylus being deflectable relative to the reference member and having a tip for contacting the surface to be measured, the dimensions of the stylus of the second contact probe being such that it can reach deeper into the one or more depressions than the stylus of the first contact probe (and also deeper into the one or more depressions than the reference member). The relative position of the tip of the stylus of the second contact probe and its reference member can be transduced (and reported/output). Accordingly, the second contact probe could also be referred to as an "analogue" or "scanning" probe. The absolute position of the reference member within the coordinate positioning machine's measurement volume can be known to a second level of accuracy that is lower than that of the first level of accuracy of the first contact probe. The second contact probe could be a unidirectional probe, e.g. one which senses unidirectionally. For instance, optionally, the deflections of the stylus of the second contact probe relative to the reference member are transduced in one degree of freedom only. Optionally, the second contact probe is configured such that its stylus is intended/configured/arranged to deflect relative to the reference member in one degree of freedom only.

The second contact probe could comprise a rotary joint, for example a motorised rotary joint, configured to rotate the stylus and reference member of the second contact probe about an axis. This is a particularly useful feature for unidirectional probes.

The stylus tip of the second contact probe could comprise a conical or frusto-conical shape. The reference member could comprise a skid which traverses the part with the stylus.

The reference member of the second contact probe can be (resiliently) deflectable relative to the coordinate positioning apparatus's probe mount. For instance, the second contact probe could comprise a spring-loaded joint between the reference member and the probe mount. Such deflection/joint could be untransduced.

The method can comprise using the first set of measurement data to determine the absolute position of the second set of measurement data within the coordinate positioning machine's measurement volume. This can comprise, for example, aligning/registering the first and second sets of measurement data. This can comprise, for example, identifying those parts of first and second sets of measurement data which represent one or more common (in other words, one or more of the same) features. For instance, the method could comprise identifying and/or aligning/registering those parts of first and second sets of measurement data which represent the peak(s) of the one or more depressions (e.g. peaks of the groove, thread, teeth, etc).

The one or more depressions could be of a toothed member. The one or more depressions could be of a threaded member. A threaded member could comprise at least one helical or spiral groove extending around and along an axis. Accordingly, for example, the part could comprise a cylindrical or spiral part (e.g. a part having a circular cross-section). Accordingly, the one or more depressions could be one or more helical or spiral grooves extending around and along an axis. Accordingly, the method of the invention could comprise a method of determining information about a threaded feature of a part, the threaded feature comprising at least one helical or spiral groove extending around and along an axis. The first set of measurement data and/or the second set of measurement data could comprise measurement data obtained at different angles around the axis (along which the helical or spiral groove nominally extends around and along). For instance, the first set of measurement data and/or the second set of measurement data could comprise measurement data obtained on diametrically opposite sides of the threaded member. In an alternative embodiment, the first set of measurement data and/or the second set of measurement data could comprise measurement data obtained along at least three lines parallel to the axis (along which the helical or spiral groove nominally extends around and along), spaced equiangularly (e.g. 120°) around the axis. Such data could be obtained by performing line scans, e.g. parallel to the axis (along which the helical or spiral groove nominally extends around and along). However, this need not necessarily be the case. For instance, the first and/or second sets of measurement could be obtained by performing a sweep scan or a helical scan. In an alternative embodiment, the first and/or second sets of measurement could be obtained by performing touch-trigger measurements as opposed to, and/or in addition to scan measurements.

Information about the one or more depressions can comprise information about (e.g. a measure of) one or more of: i) a centre line of the threaded member (in other words the "thread centre line"); ii) a pitch diameter line of the threaded member; iii) the pitch diameter or radius of the threaded member; iv) the minor diameter or radius of the threaded member (wherein the threaded member is an externally threaded member); v) the major diameter or radius of the threaded member (wherein the threaded member is an internally threaded member).

The first and second sets of measurement data could be obtained by the coordinate positioning apparatus relatively moving the probe and the part. For example, the coordinate positioning apparatus' probe mount can be moved during the obtaining of the first and second sets of measurement data. This is in contrast, for instance, to a system in which the probe comprises a motorised probe stylus which is actuated so as to drag the stylus across the part/depression(s) whilst the probe mount is held still.

Taking the first and second sets of measurement data could comprise one or more of: receiving (e.g. the first and second sets of) measurement data (e.g. from a third party), retrieving (e.g. the first and second sets of) measurement data (e.g. from a memory device), controlling the coordinate positioning apparatus so as to cause the probe to inspect the part and thereby collect (e.g. the first and second sets of) measurement data of the part. Controlling the coordinate positioning apparatus so as to cause the probe to inspect the part and thereby collect (e.g. the first and second sets of) measurement data of the part, can comprise actuating the coordinate positioning apparatus so as to relatively move the probe and part.

The coordinate positioning apparatus can comprise an articulated member comprising at least one axis of rotation, preferably at least two axes of rotation, configured such that the probe mount can be rotated about at least one axis of rotation, preferably about at least two (e.g. orthogonal) axes of rotation. The coordinate positioning apparatus' probe mount can be provided on the articulated member. Optionally, the second contact probe and/or articulated member are configured such that reference member and stylus of the second contact probe can be rotated about at least a third axis (e.g. which is orthogonal to said at least two axes of the articulated member). This can be particularly useful for those embodiments in which the second contact probe is a unidirectional probe.

The coordinate positioning apparatus could comprise a computer-controlled positioning apparatus, for example a computer numerically controlled (CNC) positioning apparatus. Suitable positioning apparatus include coordinate measuring machines (CMM) and machine tools. The positioning apparatus could comprise a Cartesian positioning apparatus (examples of which include bridge, portal and gantry CMMs) or non-Cartesian positioning apparatus (examples of which include arms, and parallel-kinematic apparatus such as hexapods). A Cartesian position apparatus typically comprises three linear orthogonally arranged moveable axes, arranged in series. A non-Cartesian position apparatus can comprise linearly moveable axes, but they are not necessary arranged orthogonally, nor in series, but nevertheless can be operated together so as to provide relative linear motion of the probe mount and part in three orthogonal degrees of freedom. In any case, the coordinate positioning apparatus can be configured to facilitate relative movement of the probe mount (and hence a probe mounted thereon) and a part to be inspected in three orthogonal degrees of freedom. In particular, the coordinate positioning apparatus can be configured to effect and monitor (in other words, "track") changes in position of the probe mount (and hence a probe mounted thereon) and a part to be inspected in three orthogonal linear degrees of freedom (e.g. x, y, z). Accordingly, the coordinate positioning apparatus can comprise actuators (e.g. motors) for effecting such a change in position and transducers (e.g. position measurement encoders) for measuring the relative position of the probe mount (and hence of a probe mounted thereon) and a part being inspected in three orthogonal linear degrees of freedom. Accordingly, the coordinate positioning apparatus can be configured to control and monitor the relative position of the probe mount (and hence of a probe mounted thereon) and a part in three orthogonal linear degrees of freedom during a measurement operation (i.e. during the collection of measurement points on the surface of a part). Optionally, this means that, if desired, the measurement data obtained by the probe could be combined with the machine position data to determine the position of the measured surface points in three-dimensional space (i.e. within the coordinate positioning apparatus' three-dimensional measurement volume).

Moving the probe relative to the part can comprise actuating at least one of said axes of the articulated member and/or one or more linear axes of the coordinate positioning apparatus.

As will be understood, the coordinate positioning apparatus can comprise devices/parts other than the (e.g. movement) structure on which the probe is mounted. For example, the positioning apparatus can comprise one or more processor devices, for example controllers and/or computers, which are in communication with the structure on which the probe is mounted. Such devices could be physically separate to the structure on which the probe is mounted. Such devices could comprise one or more input and/or output devices, e.g. a human-computer interface.

References herein to processor devices include, but are not limited to, CPUs (Central Processor Unit), FPGAs (Field Programmable Gate Array), ASICs (Application Specific Integrated Circuit), or the like.

According to a second aspect of the invention there is provided a method of determining information about a threaded feature of a part, the threaded feature comprising at least one helical or spiral groove extending around and along an axis, the method comprising: taking a first set of measurement data of the threaded feature obtained by a probe mounted on a coordinate positioning apparatus via a probe mount of the coordinate positioning apparatus; taking a second set of measurement data of the threaded feature obtained by a probe mounted on the coordinate positioning apparatus via a probe mount of the coordinate positioning apparatus, the absolute positional accuracy within the coordinate positioning machine's measurement volume of the second set of measurement data being lower than that of the first set of measurement data, but wherein the second set of measurement data comprises measurements of points of the groove at locations that are deeper within groove than that of the first set of measurement data; using the first and second sets of measurement data to determine the pitch diameter or radius of the threaded feature. Features described above in connection with the first aspect of the invention are applicable to this second aspect of the invention.

The above-described methods can be computer implemented. Accordingly, there can be provided, in accordance with the present invention, computer program code comprising instructions which, when executed by a processor device (for example, of a controller of a coordinate positioning apparatus), causes the processor device to execute the methods described above. According to a further aspect of the invention, there is provided a computer readable medium, bearing computer program code as described above.

The application also describes an apparatus for determining information about one or more depressions in a part, wherein the apparatus is configured to: take a first set of measurement data of the part obtained across the one or more depressions by a probe mounted on a coordinate positioning apparatus via a probe mount of the coordinate positioning apparatus; take a second set of measurement data of the part obtained across the one or more depressions by a probe mounted on the coordinate positioning apparatus via a probe mount of the coordinate positioning apparatus, the absolute positional accuracy within the coordinate positioning machine's measurement volume of the second set of measurement data being lower than that of the first set of measurement data, but wherein the second set of measurement data extends deeper into the one or more depressions than that of the first set of measurement data; and use the first and second sets of measurement data to determine information about the one or more depressions.

The application also describes an apparatus for determining information about a threaded feature of a part, the threaded feature comprising at least one helical or spiral groove extending around and along an axis, the apparatus being configured to: take a first set of measurement data of the threaded feature obtained by a probe mounted on a coordinate positioning apparatus via a probe mount of the coordinate positioning apparatus; take a second set of measurement data of the threaded feature obtained by a probe mounted on the coordinate positioning apparatus via a probe mount of the coordinate positioning apparatus, the absolute positional accuracy within the coordinate positioning machine's measurement volume of the second set of measurement data being lower than that of the first set of measurement data, but wherein the second set of measurement data comprises measurements of points of the groove at locations that are deeper within groove than that of the first set of measurement data; and use the first and second sets of measurement data to determine the pitch diameter of the threaded feature.

The above-mentioned apparatus could comprise a processor device, configured accordingly (i.e. configured to take the first and second sets of measurement data and use them as described). Aspects and features described above in connection with the method(s) of the invention are equally applicable to the apparatus. Accordingly, for instance, the apparatus could comprise a coordinate positioning apparatus (e.g. a CMM or machine tool). Also, for instance, references to a processor device includes, but is not limited to: CPUs (Central Processor Unit), FPGAs (Field Programmable Gate Array), ASICs (Application Specific Integrated Circuit), or the like.

Embodiments of the invention will now be described, by way of example only, with reference to the following drawings in which:
Figure 1 shows a schematic isometric view of a coordinate measuring machine (CMM) on which a skidded contact probe is mounted;
Figure 2 is a close-up view of the skidded contact probe on the articulating probe head of the CMM of Figure 1;
Figure 3 shows a section through axes A and B of Figure 2;
Figure 4 shows the skidded contact probe of Figures 1 to 3 in more detail;
Figure 5 shows a section through the skidded contact probe of Figure 4;
Figure 6 shows a non-skidded contact probe mounted on the on the articulating probe head of the CMM in place of the skidded contact probe;
Figure 7(a) illustrates a cross-section of a threaded member of a part to be measured in accordance with the method of the present invention;
Figure 7(b) shows a part of one side of the cross-section view of Figure 7(a);
Figure 8 shows an example process in accordance with the present invention;
Figures 9(a) and (b) illustrate the measurement of one side of the threaded feature using the non-skidded probe of Figure 6;
Figures 10(a) to (c) illustrate the measurement of one side of the threaded feature using the skidded probe of Figures 2 to 5;
Figure 11 illustrates a first set of measurement data obtained by using the non-skidded probe of Figure 6 to measure the threaded feature on diametrically opposite sides of the boss on which the threaded feature is formed;
Figure 12 illustrates a second set of measurement data obtained using the skidded probe of Figures 2 to 5 to measure the threaded feature along the same nominal measurement lines as that which were measured by the non-skidded probe to obtain the first set of measurement data; and
Figure 13 illustrates the alignment/registration of the second set of measurement data to the first set of measurement data;
Figures 14(a) and 14(b) schematically illustrate the use of the method of the invention to determine information about an internally threaded feature; and
Figure 15 schematically illustrates how the invention can be used without aligning/registering the data obtained by the skidded probe and the data obtained by the non-skidded probe.

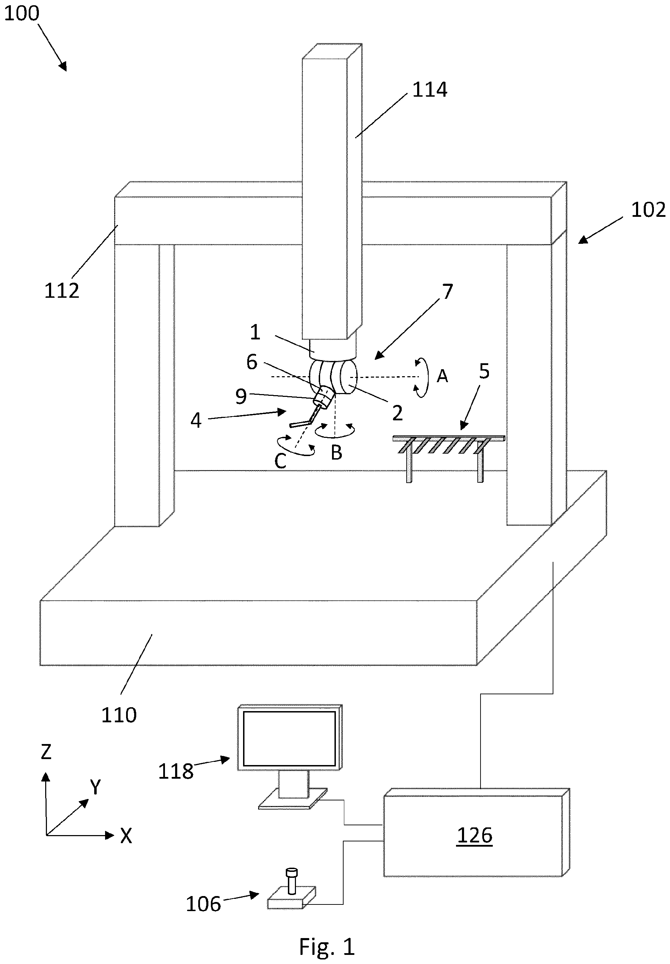

Referring to Figure 1 there is shown a coordinate positioning apparatus 100 comprising a movement structure in the form of a coordinate measuring machine ("CMM") 102. The CMM 102 comprises a base 110 on which a part to be inspected can be placed, a supporting frame 112, and a quill 114. Motors (not shown) are provided to move the quill 114 along the three mutually orthogonal axes X, Y and Z. The quill 114 holds an articulated member or "articulated head" 7, which in turn is configured to support a measurement probe thereon via a probe mount 6. The articulated head 7 facilitates rotation of a probe mounted thereon (via its probe mount 6) about two mutually orthogonal axes of rotation A, B relative to the quill 114. In Figure 1, a skidded contact probe 4 is shown mounted thereon. As explained in more detail below, different types of probe can be mounted on the articulated head 7. For example, different types of probe can be mounted thereon automatically from the rack 5 located on the CMM's base 110.

The positioning apparatus 100 also comprises a controller 126 for controlling the operation of the CMM 102 including the articulated head 7 (either manually, e.g. via an input device such as joystick 106, or automatically, e.g. under the control of an inspection program). A display device 118 can be provided for aiding user interaction with the controller 126. The controller 126 could, for example, be a dedicated electronic control system and/or may comprise a personal computer.

In this embodiment, the articulated head 7 is a continuous scanning articulated head, such as the REVO-2 articulated measuring head available from Renishaw plc. As will be understood, a continuous scanning head enables orientation of a device mounted on it at substantially any angle about at least one axis (within its range of motion) and are often described as providing a near infinite number of angular orientations (within its range of motion). Also, the orientation of the measurement device about an axis of a continuous scanning head can be changed during measurement (e.g. for a contact probe, whilst the contact probe is in contact with an object being inspected and acquiring measurement information such as stylus deflection signals). In contrast, an indexing head has a discrete number of defined ("indexed") positions at which the measurement device mounted on it can be locked. With an indexing head, the orientation of the measurement device can be changed, but not during the acquisition of surface measurement data. As will be understood, an indexing head could be used with the present invention in place of a continuous scanning head.

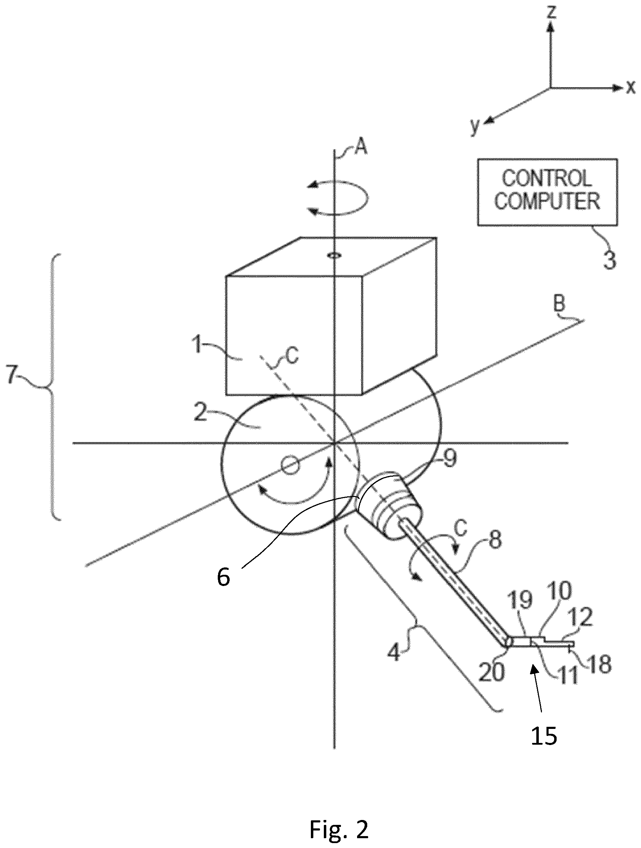

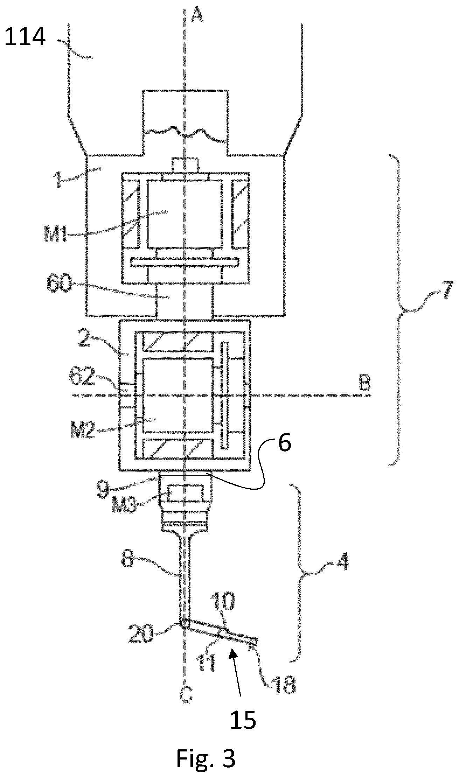

Figure 2 is a close-up view of the articulated head 7 and Figure 3 shows a section through the articulated head 7 and the skidded contact probe 4. The skidded contact probe 4 includes a transducer member 15 which is described in more detail below.

The articulated head 7 comprises first and second housing members 1 and 2 respectively. The first housing member 1 is adapted for attachment to a position determining apparatus, for example to the quill 114 of a CMM. As shown in Figure 3, the housing member 1 houses a motor M1 for effecting angular displacement of a first shaft 60 about the first axis A. Attached to the first shaft 60 is the second housing member 2, which houses a motor M2 for effecting angular displacement of a second shaft 62 about the second axis B. The skidded contact probe 4 is attached to the second shaft 62 via the probe mount 6 for rotation therewith.

Although not shown, measurement encoders may be provided for measuring the relative positions of the base 110, frame 112, quill 114 and also the first 1 and second 2 housing members of the articulated head 7 so that the position of the skidded contact probe 4 relative to a workpiece located on the base 110 can be determined.

The skidded contact probe 4 includes an elongate extension member 8 which holds the transducer member 15. The extension member 8 extends generally along an axis C, transverse to and intersecting the axis B. It is automatically exchangeably attached to and detached from the articulated head 7 via a housing 9 of the skidded contact probe 4. The articulated head's probe mount 6 and the skidded contact probe 4 (e.g. the housing 9) can comprise corresponding parts of a kinematic coupling joint of a known type, to facilitate (e.g. automated) attaching and detaching of the skidded contact probe 4. As will be understood, a kinematic mount ensures that the skidded contact probe 4 is repeatably located with respect to the articulated head 7. The housing 9 may optionally contain a motor M3 which rotates the extension member 8 about the axis C, again controlled by the program in the controller 126, so that the transducer member 15 can address differently oriented workpiece surfaces.

In the embodiment described, the skidded contact probe 4 is removably mounted on the articulated head 7 via the probe mount 6 (e.g. as mentioned above, using a kinematic mount). In the embodiment described the skidded contact probe 4 can be held on the probe mount 6 by the use of corresponding magnets (not shown) provided on or in the contact probe's housing 9 and on the articulated head 7/probe mount 6. The skidded contact probe 4 could be automatically mountable/removable, e.g. from/to a probe storage rack 5 located in the CMM's movement volume.

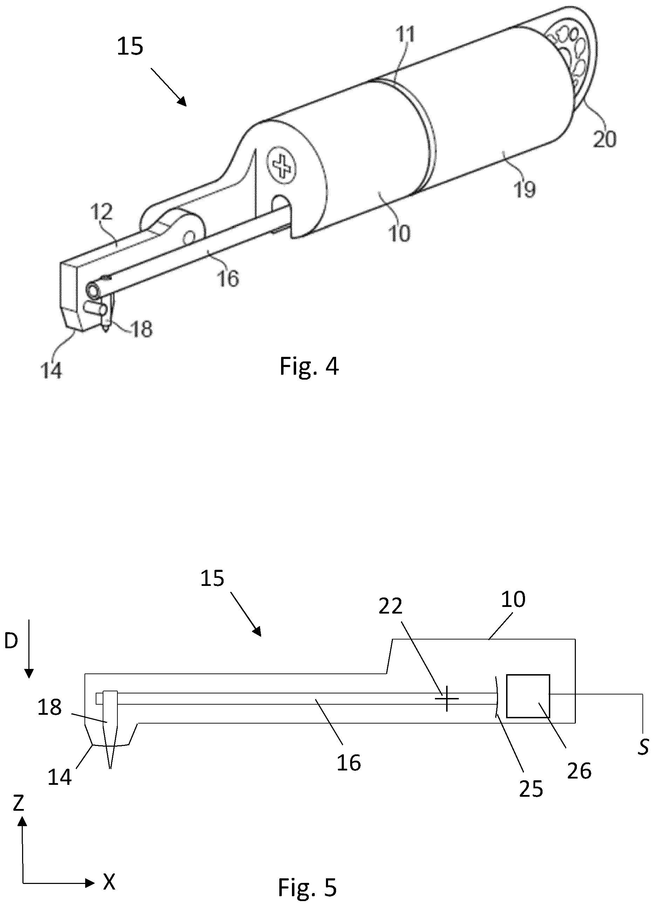

The transducer member 15 is shown in more detail in Figures 4 and 5 and comprises a housing 10, from one end of which extends a finger 12. A reference member 14 (in this embodiment a "skid" 14) is provided at the end of the finger 12, for contacting the surface of an artefact to be measured. An arm 16 extends along the finger 12, and is mounted deflectably within the housing 10, for example pivotable about crossed planar springs 22 (i.e. such that it can pivot in the Z-X plane, but such that it is stiff laterally thereto). At the end of the pivotable arm 16 is a stylus 18. The stylus 18 is biased by the springs 22 to be deflectable and to project slightly beyond the skid 14. This means that when the probe is moved into contact with the surface of an artefact in the direction of arrow D, a tip of the stylus 18 contacts the surface slightly before the skid 14. The stylus 18 and pivotable arm 16 deflect about the springs 22 to permit this. The stylus comprises a generally elongate/straight/cylindrical portion which at a first end thereof is connected to the arm 16, and also comprises at a second end thereof a conical tip portion. The cone angle of the conical tip portion is approximately 30°. In this embodiment the stylus 18 and skid 14 are co-located along the length of the contact probe. However, this need not necessarily be the case. For instance, the stylus 18 can be spaced apart from the skid 14, longitudinally (e.g. by making the stylus arm 16 substantially shorter than that shown in Figure 5).

The housing 10 is spring-mounted to a support 19 at a joint 11. This permits the skid 14 to deflect when loaded onto a surface which is to be measured. At its other end, the support 19 is attachable to the extension member 8 of the skidded contact probe 4, for example via a knuckle joint 20 which can be manually positioned to adjust the orientation of the probe for access to workpiece surfaces at different locations and orientations.

Such a joint 11 is advantageous because it lets the probe conform to undulating surfaces when the CMM scans in a straight line. It keeps the skid in contact with the part but does not over-stress the probe in the event of over-deflection. Due to various reasons including space constraints, cost and complexity, the joint is not transduced. Accordingly, the exact absolute position of the tip of the stylus 18 within the CMM's measurement volume is not known. Instead, in the embodiment described, the absolute position of the tip of the stylus 18 within the CMM's measurement volume can only be assumed to within 100 µm laterally (e.g. in the probe's X and Y coordinate dimensions), and to an even lesser in the direction in which the stylus 18 is configured to deflect (e.g. predominantly in the probe's Z coordinate dimension). Even if the joint 11 were transduced, there would still be difficulties calibrating the absolute position of the stylus 18, and so the present invention has merit with such configurations too. This is because, it can be difficult to precisely calibrate the exact position of such a small stylus. Indeed, although prior to a measurement operation the skidded contact probe 4 can be calibrated by using another probe (not shown, but for example, by a probe mounted on the rack 5) in accordance with the method described in WO2018/150169, such a calibration merely provides a measure of the approximate position of the transducer member's 15 position and orientation with respect to the CMM 102. Indeed, such a calibration method involves taking measurements of the elongate members of the skidded probe, and assumptions are made therefrom to deduce the approximate position of the stylus 18 of the skidded probe. Accordingly, even if the joint 11 were transduced, the exact position of the stylus 18 of the skidded probe is not known to a high level of accuracy.

The transducer member 15 can be moved by one or more of the linear and rotary axes of the CMM 102 and its articulated head 7, under the control of a program in the controller 126 of the CMM. The controller 126 can thus operate the CMM 102 and its articulated head 7 so as to bring the transducer member 15 into contact with a workpiece to be measured, and then move the skid 14 and the tip of the stylus 18 along the surface. The resulting deflections of the stylus 18 relative to the skid 14 are measured by a transducer in the housing 10. The transducer produces a signal S which is passed back to the controller 126 which uses the signals S to determine dimensional information about the workpiece as described in more detail below.

In this embodiment, the transducer comprises a small encoder, comprising a scale 25 mounted on the end of the arm 16 distal the stylus 18 and a readhead 26. A light source within the readhead 26 projects light toward the scale 25 which diffracts and reflects light back toward the readhead 26 so as to produce interferences patterns which are detected by a sensor within the readhead 26. Motion of the arm 16 causes the interference pattern to move, which is sensed at the readhead, and converted into Sine and Cosine quadrature signals, 90 degrees out of phase with each other. The quadrature signals are used to generate a count of the relative position of the scale and readhead which is reported via the signal S to the controller 126.

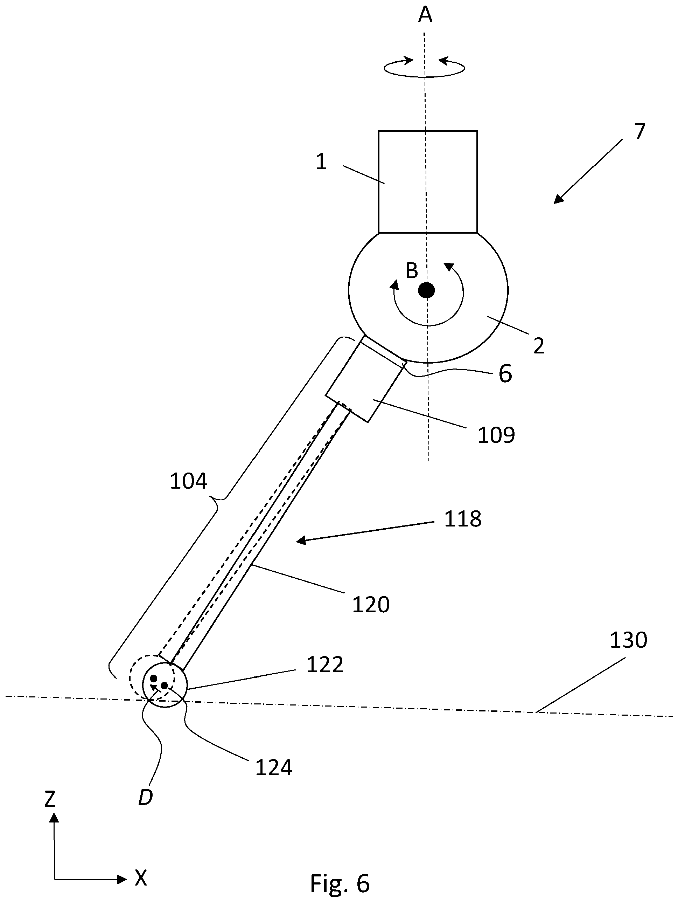

As mentioned above, different types of probe can be mounted on the probe mount 6 in place of the skidded contact probe 4. An example of a non-skidded contact probe 104 mounted to the probe mount 6 is illustrated in Figure 6. As shown, the non-skidded contact probe 104 comprises a body 109 and a stylus 118. The stylus 118 comprises a shaft 120 and a spherical tip 122. Typically, the location of the centre-point 124 of the spherical tip 122 in the CMM's measurement volume will be known via calibration of the probe 104 when loaded on the CMM. The probe 104 could be a touch-trigger probe or could be what is commonly referred to as an analogue/scanning probe. As explained in the background part of this document, touch-trigger probes and analogue/scanning probes are well-known to those skilled in the art. In the embodiment described, the probe 104 is an analogue/scanning probe. The analogue/scanning probe 104 is configured such that the stylus 118 can deflect relative to the body 109. Such a deflection "D" due to contact with a surface 130 is schematically illustrated by the phantom lines in Figure 6. In the embodiment described, transducers (not shown) in the probe body 109 measure the extent and direction of deflection of the stylus 118 such that the centre-point 124 of the deflected stylus within the CMM's 102 (not shown in Figure 6) measurement volume can be determined.

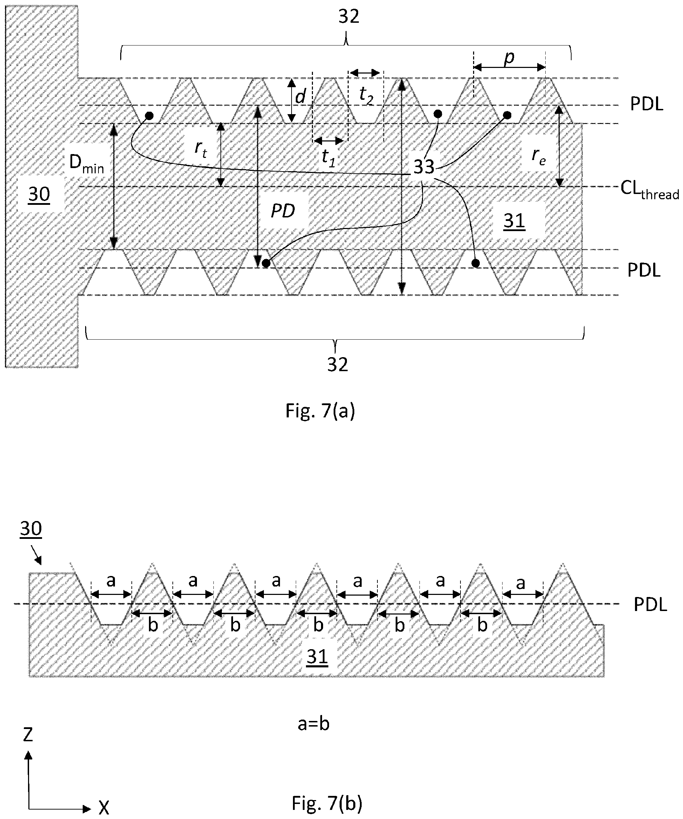

An example process 200 for inspecting an artefact in accordance with the method of the invention will now be described with reference to Figures 7 to 13.

Figure 7(a) illustrates a cross-section through an example part 30 having a cylindrical boss 31 having with an outer thread feature 32 formed on its outer cylindrical surface, e.g. as is shown in this case, a helically extending depression/groove 33 is formed on the outer cylindrical surface of the boss. As will be understood, the thread (i.e. the groove 33) extends around and along an axis, which may or may not be coincident with the axis of the cylindrical boss 31. Indeed, such misalignment of the axes might well occur when the threading tool (such as a tap or die) used to form the thread on a previously formed boss (or hole) was not properly aligned with the boss (or hole). In the embodiment, shown, the depth "*d*" of the thread is approximately 270 µm and the pitch "*p*" of the thread is approximately 500 µm.

As illustrated in Figure 7(a), in the embodiment described, the invention is used to find the thread centre line "CL_{thread}" and the pitch diameter PD of the threaded feature. As will be understood, the pitch diameter PD is the diameter/distance between diametrically opposing pitch diameter lines PDL. The thread centre line CL_{thread} is the line equidistant from pitch diameter lines PDLs of the thread (i.e. equidistant from two diametrically opposite PDLs or equidistant from at least three PDLs obtained at different angles around the axis around and along which the thread extends). As will be understood, a pitch diameter line PDL is a line where the groove width is equal to the thickness of the material between adjacent grooves (i.e. as illustrated in Figure 7(a) where *t₁* = *t₂*). As illustrated in Figure 7(b), this can be found by fitting straight lines to the sloping sides of the threaded feature and then finding a centre line such that the sloping lines intersect the centre line with equal spacing. An alternative (albeit potentially less accurate) method is to identify the midway point between the upper and lower vertices where the fitted straight lines intersect.

The thread centre line CL_{thread} and/or pitch diameter PD can be determined from diametrically opposing pitch diameter lines PDLs that were determined from measurements obtained by the skidded probe 4 along diametrically opposed lines. However, as will be understood, this need not necessarily be the case. For instance, the pitch diameter PD could be determined by determining the effective radius *rₑ* from one line of measurement data obtained by the skidded probe 4 and then doubling the value. As another example, at least second and third lines of measurement data could be obtained by skidded probe, at a different (non-diametrically opposite) angles about the axis around and along which the helical thread extends, and the thread centre line CL_{thread} and pitch diameter PD information can be deduced therefrom. For instance, by finding pitch diameter lines PDLs for each of the at least three lines of measurement data and then fitting a cylinder to those pitch diameter lines PDLs; the thread centre line CL_{thread} and pitch diameter PD being determined from the fitted cylinder.

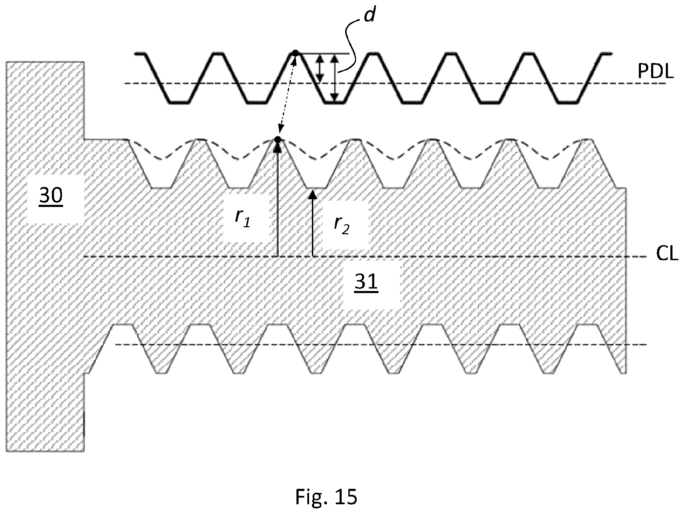

As will be understood, the thread centre line CL_{thread} cannot be found solely from the data obtained by a single linear scan performed by the skidded probe 4 (parallel to the axis around and along which the helical thread extends). In such a case, the centre line could be assumed, for instance from data obtained by the non-skidded probe 104. However, as explained and illustrated below in connection with Figure 15, such assumptions can lead to erroneous data because it might be that the thread centre line CL_{thread} is not identifiable from the measurements of the crests obtained by the non-skidded probe 104 because the centre line of the crests might be misaligned to the thread centre line CL_{thread}. Accordingly, it can be preferred to identify the thread centre line CL_{thread} from measurement data obtained by the skidded probe 4 along multiple scan lines at different (preferably diametrically opposite) angles about the axis around and along which the helical thread extends.

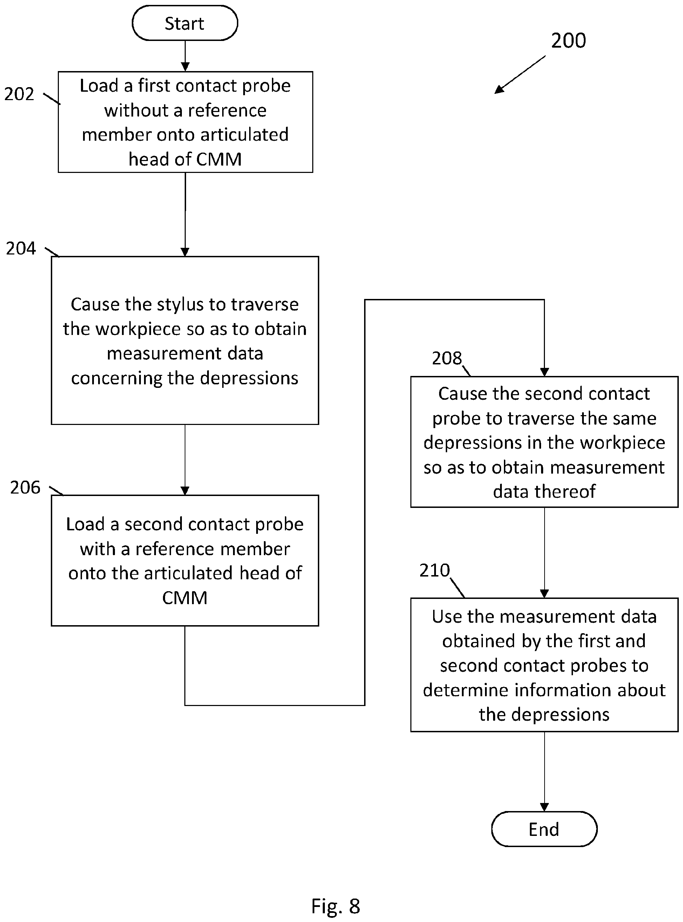

Referring now to Figure 8, the method begins at step 202 wherein the analogue/scanning probe 104 of Figure 6 (which does not have a reference member) is loaded onto the probe mount 6 of the CMM's articulated head 7. Preferably, this takes place automatically under the control of the controller 126, whereby the articulated head 7 is driven so as to pick up the analogue/scanning probe 104 automatically from the rack 5 located in the CMM's 102 operating volume.

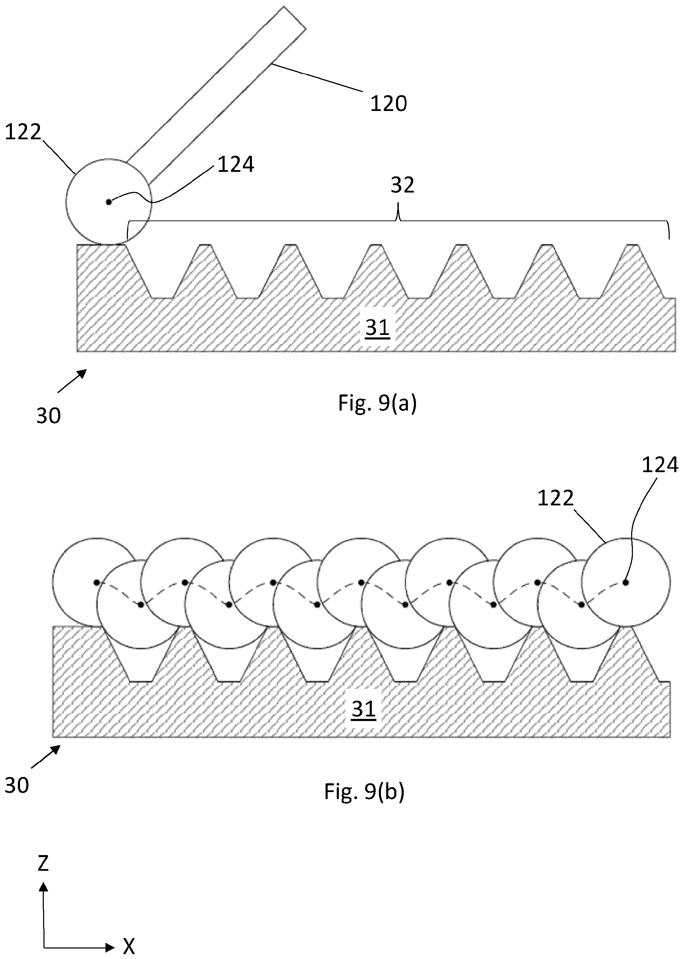

At step 204, the analogue/scanning probe 104 is then moved (under the control of the controller 126 moving the CMM 102) such that the stylus tip 122 contacts and is urged into the part 30 (as illustrated in Figure 9(a)), and the analogue/scanning probe 104 is moved along the length of the boss 31 (in a direction parallel to the axis around and along which the helical thread extends), such that the probe tip 122 traverses across successive depressions along the measurement path formed in the part 30 by the helical extending groove of the threaded feature 32. During such motion the tip centre 124 position is recorded.

As illustrated in Figure 9(a), the diameter of the stylus tip 122 is larger than the mouth of the groove of the threaded feature 32. Accordingly, the stylus tip 122 cannot reach fully into the groove of the threaded feature 32 and obtains few, if any, direct measurements of the sides of the groove of the threaded feature. However, as illustrated in Figure 9(b), the stylus tip 122 does dip/fall into the groove and therefore the measurement data has an undulating profile.

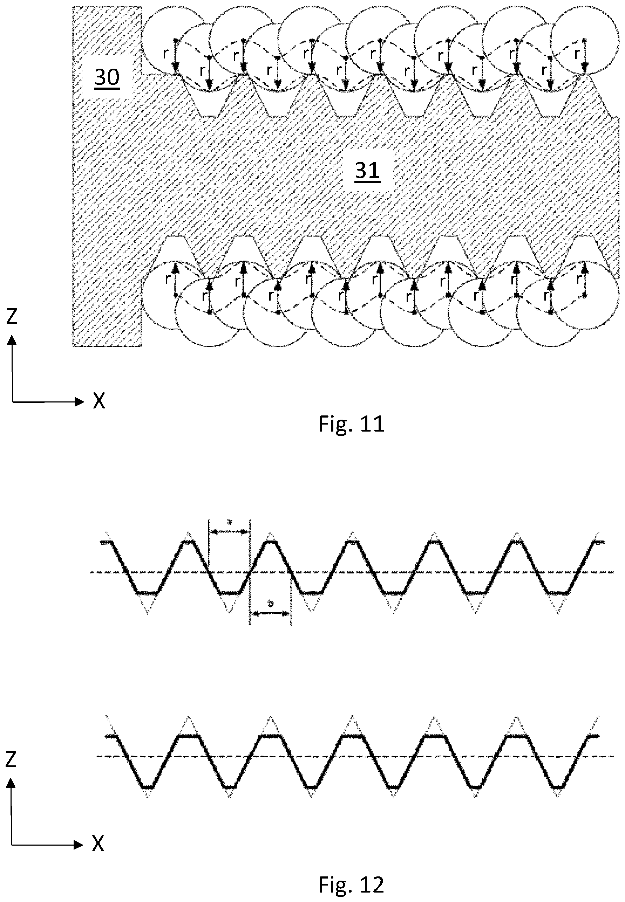

In the embodiment described, the analogue/scanning probe 104 is then used to measure the threaded feature 32, in the same way, on a diametrically opposite side of the boss 31. As will be understood, in order to get surface position measurements, the data points obtained during these two scans by the analogue/scanning probe 104 are offset by the stylus tip's radius. These offset measurement points form a first set of measurement data. Such a first set of measurement data is schematically illustrated in Figure 11 and will be referred to in more detail below.

The next step of the process is at step 206 wherein the skidded probe 4 of Figures 2 to 5 is loaded onto the probe mount 6 of the CMM's articulated head 7. Preferably, this takes place automatically under the control of the controller 126, whereby the articulated head 7 is driven so as to drop off the analogue/scanning probe 104 in the rack 5 and to then pick up the skidded contact probe 4 automatically from the rack 5.

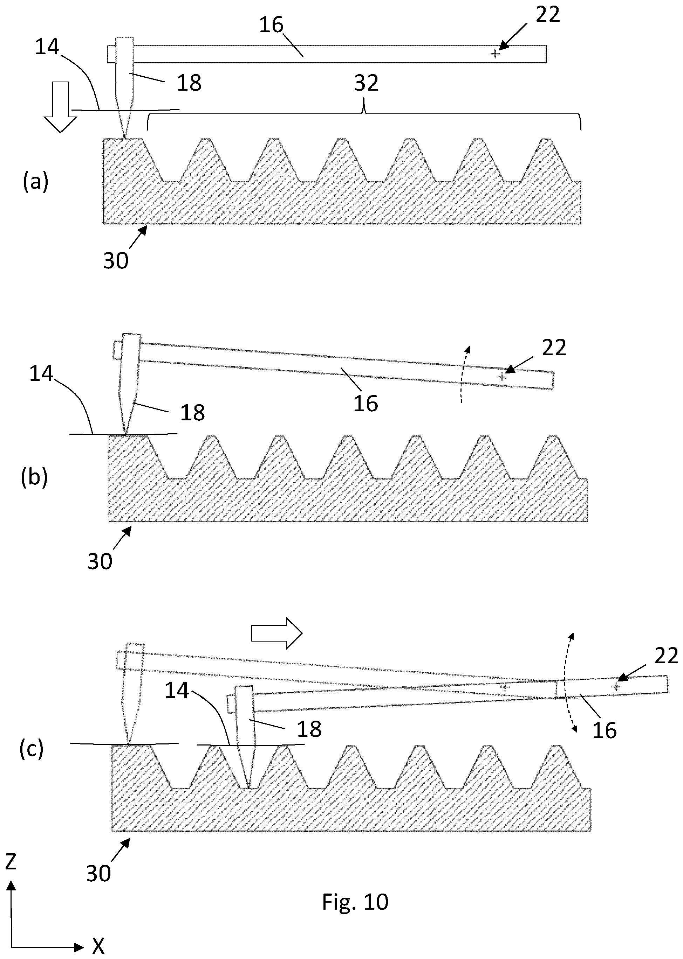

At step 208, the controller 126 operates the CMM 102 to move the skidded contact probe 4 so as to bring the contact probe's stylus 18 and reference member (in this case the skid 14) so as to engage the part 30. As shown in Figure 10(a) and 10(b), initially the stylus 18 will engage the surface of the part 30 before the skid 14 does. As illustrated in Figure 10(b), the action of continuing to operate the CMM 102 to move the skidded contact probe 4 toward the surface of the artefact 30 after the stylus has engaged the surface causes the skid 14 to approach the surface until it also engages the surface. As a result, the stylus 14 rotates about its pivot point 22. The controller 126 then controls the CMM 102 so as to cause the stylus 18 and skid 14 to traverses across successive depressions along the measurement path which are formed by the helical extending groove of the threaded feature 32. As illustrated in Figure 10(c), the stylus 18 and arm 16 oscillate about the pivot point 22 as the stylus drops into and rises out of the depressions (helical groove), with the transducer 26 outputting to the controller 126 a signal S indicative of the extent of rotation.

In the embodiment described, the skidded probe 4 is then used to measure the threaded feature 32, in the same way, on a diametrically opposite side of the boss 31. Together, these two measurements provide a second set of measurement data. Such a second set of measurement data is schematically illustrated in Figure 12 and will be referred to in more detail below.

As illustrated by Figure 10, the stylus 18 swings about its pivot point 22 which means that the lateral position (in "x") of the very tip of the stylus 18 changes depending on its vertical position (in "z"). This can have an impact on the measurement data, in particular it can impart skew onto the measurement data. Accordingly, if necessary, a non-linear correction can be applied to the measurement data obtained by the skidded probe 104 to remove skew caused by the swing of the stylus 18. As will be understood, such skew correction will be based on the mechanics of the skidded contact probe 4, in particular the geometry of the stylus, such as the distance between the stylus 18 and the pivot point 22, and the length of the stylus 18.

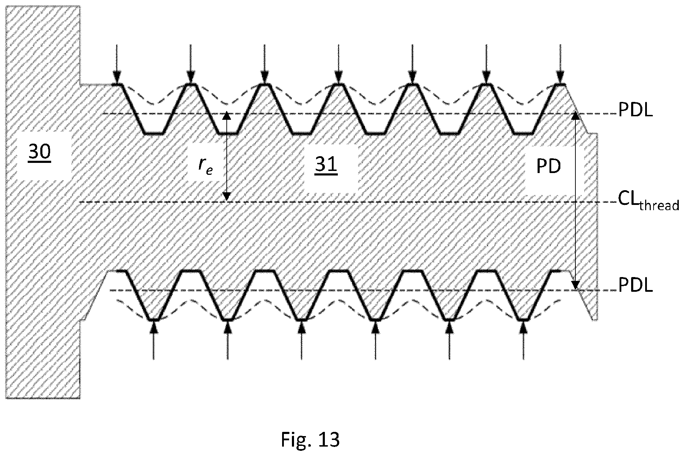

Once any desired/optional corrections have been applied to the measurement data, the first and second sets of measurement data are used, at step 210, to determine information about the depressions, e.g. the threaded feature. In the embodiment described, this comprises aligning/registering the second set of measurement data to the first set of measurement data. This is because, whilst the second set of measurement data will contain more detailed information about the profile of the threaded feature (because, due to the configuration of the stylus 18 that was used to obtain the second set of measurement data, it contains measurements of points of the threaded feature at locations that are deeper within the thread's grooves than that of the first set of measurement data) the absolute positional accuracy within the coordinate positioning machine's measurement volume of the second set of measurement data is lower than that of the first set of measurement data. Accordingly, as illustrated in Figure 13, in the embodiment described, the peaks in the second set of measurement data are aligned/registered to the peaks in the first set of measurement data. Once aligned/registered, the aligned/registered second set of measurement data can be used to determine information about the threaded feature with the confidence that the absolute positional uncertainty in the second set of measurement data has been removed (or at least significantly reduced).

The process 200, could be executed in full or only in part by the controller 126.

For example, as will be understood, whilst step 210 could be executed by the controller 126, step 210 could be executed by a processor device separate/remote to the coordinate positioning apparatus 100.

In the embodiments described, a notional saw-tooth thread profile is fitted to the aligned/corrected second set of measurement data and then pitch diameter lines (PDLs) are identified therefrom. The pitch diameter PD and thread centre line CL_{thread} of the threaded feature 32 can then be determined therefrom.

In the embodiments described, each depression shown in the cross-sectional drawings of Figures 7, 9 and 10 is the result of/part of single helical groove which extends along a cylindrical part, and therefore each depression depicted in those figures is a cross-section of different points along the helix. As will be understood, in alternative embodiments, each depression could be a separate, distinct recess. For instance, the feature 31 of the part 30 could be a flat/planar section, which comprise a series of straight elongate grooves (of which Figures 7, 9 and 10 depict cross-sections thereof).

In the embodiments described, the first and second set of measurement data comprise data points obtained along nominally the same straight line, which extends parallel to the axis of the boss/bore and/or axis of the helical/spiral thread. As will be understood, this need not necessarily be the case. Furthermore, the first and/or second sets of measurement data need not comprise data points obtained along a straight line. For instance, the data points in a set could be obtained by sweep scanning across the threaded feature. In another example embodiment, the first set of data points are obtained by controlling the analogue/scanning probe 104 to perform a helical scan of the surface of the threaded feature 32 of the cylindrical boss 31, and the second set of data points are obtained by controlling the skidded probe 4 to perform at least one straight line scan along at least part of the length of the cylindrical boss 31. In another embodiment, the data points in a set could be obtained by taking a plurality of discrete, for instance touch-trigger, measurements at a number of different locations which do not necessarily prescribe to any set path.

In the embodiments described, the first and second set of measurement data comprises data obtained along and over substantially the same measurement line. This need not necessarily be the case. For instance, the first set of measurement data could comprise measurements of a subset of features of the part (for which measurement data has also been collected in the second set of measurement data) which enable the positioning of the second set of measurement data within the CMM's measurement volume. For instance, just the centre-point of specific ridges of the threaded feature (e.g. of the first and final ridge) could be measured which can then be used to position the second set of measurement data within the CMM's measurement volume.

In the embodiments described, the method of the invention is used to find the thread centre line CL_{thread} and the pitch diameter PD of the thread (which is equivalent to twice the effective radius "*rₑ*" of the thread). As will be understood, the method of the invention can be used to measure other aspects of the thread which can't be directly measured by the non-skidded contact probe 4, such as the minor diameter Dₘᵢₙ of an external thread (see Figure 7(a)), the major diameter of an internal thread (not shown), or the thread trough radius "*rₜ*".

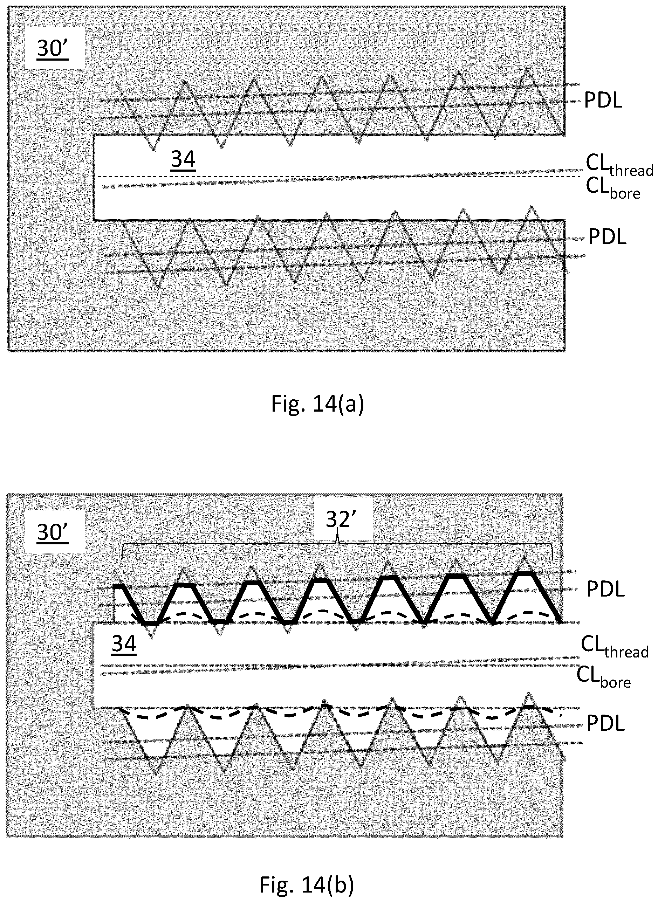

In the embodiments described, the method is used to find information about an outer thread feature formed on an outer cylindrical surface of boss. As will be understood, the same invention and techniques can be used to find information about an inner thread feature formed on the inner surface of a hole. For instance, Figures 14(a) and 14(b) schematically illustrate the invention being used to in connection with an inner thread feature formed on the inner surface of a bore/hole. In this example, the feature was formed by initially drilling a blind bore 34 in the part 30' and subsequently the threaded feature 32' was formed using a separate tool. (Figure 14(a) illustrates the part 30 with the blind bore 34 before the threaded feature was formed, and Figure 14(b) illustrates the part 30 after the threaded feature has been formed). As illustrated, a misalignment between the axis of the tool used to make the blind bore 34 and the axis of the tool used to make the thread feature 32', results in the threaded feature 32' being skewed relative to the blind bore 34. Accordingly, as illustrated in Figure 14(b), the centre line of the blind bore CL_{bore} and the thread centre line CL_{thread} are angled with respect to each other. Using the technique of the invention described above, such information about misalignment of said centre lines can be easily identified. For instance, the non-skidded probe 104 can be used to obtain a first data set (the represented by the dashed wavey line in Figure 14(b)) of the crests of the threaded feature 32', and the skidded probe 4 can be used to obtain a second data set (represented by the solid bold undulating line in Figure 14(b)) of the crests and troughs of the threaded feature 32'. The second data set can be aligned/registered to the first data set (e.g. by aligning/registering the peaks thereof), and the thread centre line CL_{thread} can be identified from the aligned/registered second data set. The centre line of the bore CL_{bore} can be found from the non-skidded probe data. The angles therebetween can then be determined.

As will be understood, in contrast to the embodiments described above, the shape of the bore/boss need not necessarily be cylindrical. For instance, the shape of such a bore/boss could be (frusto)conical, in which case the thread will have a spiral form as opposed to a helical form.

The embodiments described above involve aligning/registering the second set of measurement data to the first set of measurement data. However, as will be understood, this need not necessarily be the case. The first and second sets of measurement data can be used to determine information about one or more depressions in a part, e.g. a helical groove, without the aligning/registering step. For instance, Figure 14 schematically illustrates a situation in which the data from the non-skidded probe 104 (represented by the dashed wavy line) and the data from the skidded probe 4 (represented by the solid bold undulating line) are not aligned/registered. However, the two data sets can be used, for instance, to find the radius *r₂* of one or more of the trough features. The radius *r₁* of one or more of the peaks of the cylindrical boss 31 of the part 30 can be found from the data from the non-skidded probe 104 alone, and the actual depth *d* of the groove as measured from the corresponding peak to an adjacent trough can be found from the data from the skidded probe 4 alone. However, neither the radius *r₂* , nor the absolute position of the pitch diameter line (PDL) in the CMM's measurement volume, can be found from either data set in isolation. Nevertheless, as will be understood, such information can be found using both sets of data. For example, the radius *r₂* of the trough can be found from: *r₂* = *r₁* - *d.*

In the embodiments described, the method is used to find information about a threaded feature. As will be understood, the method of the invention can also be used to find information about non-threaded features. For instance, the method of the invention can be used to find information about a single depression in the surface of a part, or a series of depressions located just one side of a part.

In the embodiments described, a skidded contact probe 4 is used for obtaining the second set of measurement data. However, this need not necessarily be the case. For instance, a second (e.g. analogue) contact probe which has a stylus tip configured such that it can extend/reach deeper into the depression(s) than that of the analogue contact probe 104 described above, but the absolute position of which is known with less accuracy than that of the analogue contact probe 104 described above could be used in place of the skidded contact probe 4 for obtaining the second set of measurement data.

In the embodiments described, contact probes are used for obtaining both the first and second sets of measurement data. However, this need not necessarily be the case. For instance, a non-contact probe could be used for obtaining the first and/or second sets of measurement data. For instance, suitable non-contact probes include laser distance measuring probes and/or camera/image probes.

## Claims

1. A method of determining information about one or more depressions in a part, the method comprising:
taking a first set of measurement data of the part obtained across the one or more depressions by a probe mounted on a coordinate positioning apparatus via a probe mount of the coordinate positioning apparatus;
taking a second set of measurement data of the part obtained across the one or more depressions by a probe mounted on the coordinate positioning apparatus via a probe mount of the coordinate positioning apparatus, the absolute positional accuracy within the coordinate positioning machine's measurement volume of the second set of measurement data being lower than that of the first set of measurement data, but wherein the second set of measurement data extends deeper into the one or more depressions than that of the first set of measurement data;
using the first and second sets of measurement data to determine information about the one or more depressions.

2. A method as claimed in claim 1, in which the first set of measurement data is obtained via a first contact probe and the second set of measurement data is obtained by a second contact probe that is different to the first contact probe.

3. A method as claimed in claim 2, in which:
the first contact probe comprises a workpiece contacting stylus tip, the absolute position of which within the coordinate positioning machine's measurement volume is known to a first level of accuracy; and
the second contact probe comprises a reference member for engaging the part, and the second contact probe further comprising a stylus, the stylus being deflectable relative to the reference member and having a tip for contacting the surface to be measured, the dimensions of the stylus of the second contact probe being such that it can reach deeper into the one or more depressions than the stylus of the first contact probe and also than the reference member, wherein the relative position of the tip of the stylus of the second contact probe and its reference member is transduced, but wherein the absolute position of the reference member within the coordinate positioning machine's measurement volume is known to a second level of accuracy that is lower than that of the first level of accuracy of the first contact probe.

4. A method as claimed in claim 3, wherein the reference member of the second contact probe is deflectable relative to the coordinate positioning apparatus's probe mount, such deflection being untransduced.

5. A method as claimed in any preceding claim, comprising using the first set of measurement data to determine the absolute position of the second set of measurement data within the coordinate positioning machine's measurement volume.

6. A method as claimed in claim 3 or 4, in which the reference member comprises a skid which traverses the part with the stylus.

7. A method as claimed in any preceding claim, in which the one or more depressions are of a threaded member which comprises at least one helical or spiral groove extending around and along an axis.

8. A method as claimed in claim 7, in which the first set of measurement data and the second set of measurement data both comprise measurement data obtained at different angles around the axis.

9. A method as claimed in claim 7 or 8, in which the information about the one or more depressions comprises determining information about one or more of i) the thread centre line, ii) a pitch diameter line of the threaded member, iii) the pitch diameter or radius of the threaded member, iv) the minor diameter or radius of the threaded member, wherein the threaded member is an externally threaded member; and v) the major diameter or radius of the threaded member, wherein the threaded member is an internally threaded member.

10. A method as claimed in any preceding claim, in which the first and second sets of data were obtained by the coordinate positioning apparatus relatively moving the probe and the part.

11. A method as claimed in any preceding claim, in which the coordinate positioning apparatus comprises an articulated member configured such that the coordinate positioning apparatus' probe mount can be rotated about at least one axis of rotation, preferably about at least two axes of rotation.

12. A method as claimed in claims 3 and 11, in which the second contact probe and/or articulated member are configured such that the reference member and the stylus of the second contact probe can be rotated about at least a third axis of rotation.

13. A method as claimed in claim 10 and 11, in which moving the probe relative to the part comprises actuating at least one of axes of the articulated member and/or one or more of the linear axes of the coordinate positioning apparatus.

14. A method of determining information about a threaded feature of a part, the threaded feature comprising at least one helical or spiral groove extending around and along an axis, the method comprising:
taking a first set of measurement data of the threaded feature obtained by a probe mounted on a coordinate positioning apparatus via a probe mount of the coordinate positioning apparatus;
taking a second set of measurement data of the threaded feature obtained by a probe mounted on the coordinate positioning apparatus via a probe mount of the coordinate positioning apparatus, the absolute positional accuracy within the coordinate positioning machine's measurement volume of the second set of measurement data being lower than that of the first set of measurement data, but wherein the second set of measurement data comprises measurements of points of the groove at locations that are deeper within groove than that of the first set of measurement data;
using the first and second sets of measurement data to determine the pitch diameter of the threaded feature.
